# EUROPÄISCHE PATENTSCHRIFT

(11) **EP 0 514 643 B1**
(45) Veröffentlichungstag und Bekanntmachung des Hinweises auf die Patenterteilung: **25.01.1995**
(21) Anmeldenummer: 92104855.9
(22) Anmeldetag: 20.03.1992
(51) Int. Cl.: F02F 1/42, F01L 1/04, F02B 19/14

(54) **Zylinderkopf für eine mehrzylindrige Brennkraftmaschine**
Cylinder head for a multi cylinder internal combustion engine
Culasse pour un moteur à combustion interne à plusieurs cylindres

(30) Priorität: 24.05.1991 DE 4116944
(43) Veröffentlichungstag der Anmeldung: 25.11.1992
(73) Patentinhaber: MERCEDES-BENZ AG, 70327 Stuttgart (DE)
(72) Erfinder: Klingmann, Rolf, Dipl.-Ing., W-7067 Plüderhausen (DE); Spengel, Christoph, Dipl.-Ing., W-7000 Stuttgart 61 (DE)

(56) Entgegenhaltungen:
- EP-A- 0 383 297
- EP-A- 0 461 952
- DE-C- 3 940 845
- GB-A- 1 151 619
- US-A- 3 087 473

## Beschreibung

Die Erfindung bezieht sich auf einen Zylinderkopf für eine mehrzylindrige Brennkraftmaschine gemäß dem Oberbegriff des Patentanspruchs 1.

Die DE-PS 39 40 845 zeigt einen Zylinderkopf bestehend aus einem Zylinderkopfgehäuse und einem auf dieses Zylinderkopfgehäuse aufgesetzten Lagerbock zur Aufnahme von Nockenwellen und dazugehörigen Lagerdeckeln. Der Lagerbock liegt dabei auf einem durch die Seiten- bzw. Stirnwände des Zylinderkopfgehäuses gebildeten Flansch sowie einer zwischen den einzelnen Zylinderabschnitten in der Mittellängsebene des Zylinderkopfes angeordneten Stützsäule auf. Der aus dem oberen Abschluß der Seiten- bzw. Stirnwände gebildete Flansch dient gleichzeitig als Auflage für eine den Steuerraum abschließende Zylinderkopfhaube. Im Zylinderkopfgehäuse ist eine zylinderaxial verlaufende rohrförmige Kammer zur Aufnahme einer Zündkerze oder einer Einspritzdüse vorgesehen, die oberhalb der Zylinderkopfdeckplatte im Steuerraum mündet.

Die Anordnung der Trennebene zwischen Zylinderkopfgehäuse und Lagerbock in Höhe des oberen Abschlusses der Zylinderkopfseiten- bzw. stirnwände oberhalb des Abschlusses der rohrförmigen Kammer bringt den Nachteil mit sich, daß bei der Herstellung des Zylinderkopfgehäuses die Oberflächenbearbeitung der Trennebene und des Kammerabschlusses in getrennten Arbeitsgängen erfolgen muß. Diese Tatsache verlängert die Bearbeitungszeit und verteuert die Herstellung. Ein weiterer Nachteil bei dem bekannten Zylinderkopf besteht darin, daß durch den auf den Seiten- bzw. Stirnwänden aufliegenden Lagerbock die sich zwischen diesem und der Zylinderkopfdecke verlaufenden Wände zu Schwingungen angeregt werden und somit die Geräuschabstrahlung der Brennkraftmaschine erhöhen.

Ferner ist aus der EP-A-0 383 297 ein Zylinderkopf für eine Brennkraftmaschine bekannt, dessen Zylinderkopfgehäuse aus einem die Gaswechselkanäle und Kühlmittelräume enthaltenden ersten Gehäuseteil und einem mit diesem verbundenen zweiten Gehäuseteil besteht, welches die Nockenwellenlagerung und die Ventilbetätigungsteile umfaßt.
Von Nachteil ist hierbei vor allem die Zweiteilung des Zylinderkopfgehäuses, die neben der Trennfuge für die Zylinderkopfhaube noch mit einer weiteren zusätzlich abzudichtenden Trennfuge verbunden ist.

Aufgabe der Erfindung ist es daher, einen Zylinderkopf der bekannten Art so auszugestalten, daß der Aufwand bei der Fertigung verringert wird. Eine weitere Aufgabe besteht darin, die durch die Zylinderkopfseitenwände verursachte Geräuschabstrahlung zu minimieren.

Die Aufgabe wird erfindungsgemäß durch die im kennzeichnenden Teil des einzigen Patentanspruchs angegebenen Merkmale gelöst. Weitere Merkmale und Vorteile gehen aus der Beschreibung hervor.

Ausgehend von einem Zylinderkopf für eine mehrzylindrige Brennkraftmaschine nach dem Stand der Technik mit im Zylinderkopfgehäuse zylinderaxial verlaufenden rohrförmigen Kammern ist erfindungsgemäß der oberhalb der Deckplatte des Zylinderkopfgehäuses im Steuerraum angeordneten Lagerbock so gelegt, daß die Trennebene zwischen dem Zylinderkopfgehäuse und dem Lagerbock auf der Höhe des durch eine Befestigung für die Kammer gebildeten oberen Randes verläuft. Auf diese Weise ist gewährleistet, daß alle Auflageflächen auf der Unterseite des Lagerbocks und alle entsprechenden Auflageflächen im Zylinderkopfgehäuse jeweils in einer Ebene liegen und somit in einem Vorgang bearbeitet werden können. Ein Umspannen der Teile oder ein Verfahren des Werkzeugs in eine andere Ebene entfällt. Der Fertigungsaufwand wird verringert und die Bearbeitungszeit verkürzt. Durch die beschriebene Verlegung der Trennebene werden vom Nockentrieb verursachte Schwingungen direkt in das Zylinderkopfgehäuse eingeleitet und nicht mehr über die Zylinderkopfstirn- und seitenwände. Die von diesen Wänden ausgehende Geräuschabstrahlung wird vermindert. Schließlich ist noch von Vorteil, daß das Zylinderkopfgehäuse zwischen Zylinderkopfdeckplatte und der Ebene zur Auflage der Zylinderkopfhaube einteilig bleibt, wodurch die Festigkeit nicht beeinträchtigt ist und der bei zweiteiligen Zylinderkopfgehäuse sonst übliche mechanische und abdichtungsseitige Aufwand entfällt.

Ein Ausführungsbeispiel der Erfindung ist nachstehend anhand der Zeichnung beschrieben. Es zeigt
- Figur 1: einen Teil eines Zylinderkopfes in der Draufsicht,
- Figur 2: einen Schnitt durch den Zylinderkopf in Höhe des Nockenwellenlagers gemäß Schnittlinie II-II aus Figur 1,
- Figur 3: einen weiteren Schnitt durch den Zylinderkopf aus Figur 1 gemäß der Linie III-III.

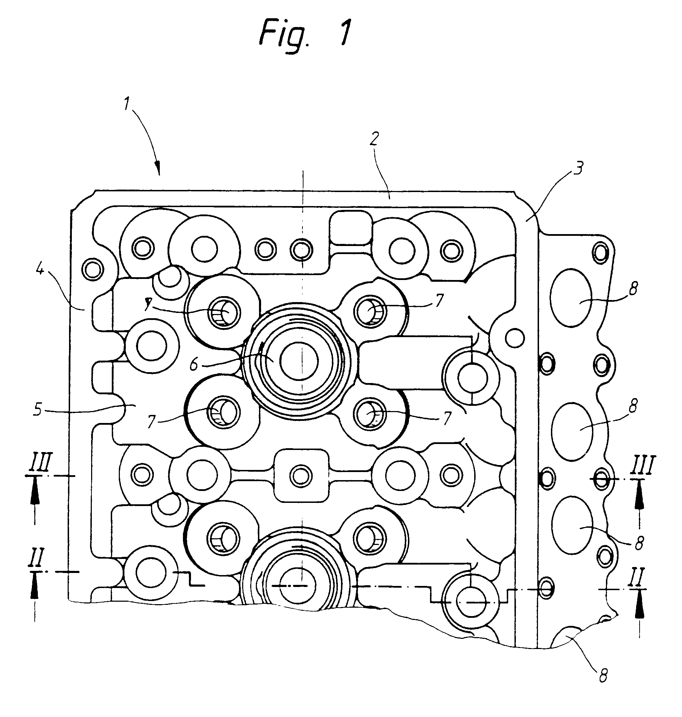

Der in der Figur 1 in einer Draufsicht teilweise dargestellte Zylinderkopf 1 weist einen durch seine Stirnwand 2 und seine Seitenwände 3 und 4 begrenzten Steuerraum 5 auf. Der Zylinderkopf 1 in dieser Abbildung ist als Vierventil-Zylinderkopf mit einer zentralen Kammer 6 zur Aufnahme einer Einspritzdüse, einer Vorkammer oder einer Zündkerze ausgebildet, um welche herum vier Führungsbohrungen 7 zur Aufnahme der Ventilschäfte angeordnet sind. Mit 8 sind die Einlaßkanäle zu den Zylindern bezeichnet.

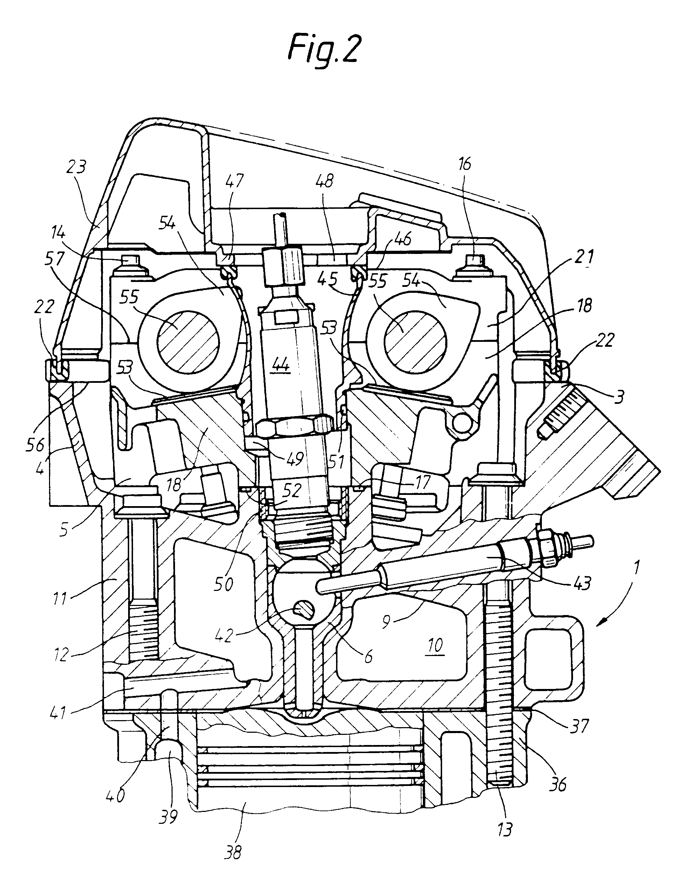

Der beschriebene Zylinderkopf 1 ist in der Figur 2 in einem Schnitt gemäß der Linie II-II aus Figur 1 dargestellt. Dieser Querschnitt ist durch die Zylindermitte gelegt. Übereinstimmende Teile in dieser Figur tragen die gleichen Bezugszeichen wie sie in der Figur 1 verwendet werden. Der Zylinderkopf 1 weist einen durch eine Zylinderkopfdeckplatte 9 abgeschlossenen Kühlwasserraum 10 auf sowie den bereits erwähnten oberhalb der Deckplatte liegenden und durch die Wände 3 und 4 begrenzten Steuerraum 5. Das Zylinderkopfgehäuse 11 ist über Verschraubungen 12 und 13 mit einem Zylinderkurbelgehäuse 36 lösbar verbunden. Über weitere Verschraubungen 14 und 16 ist an der Trennebene 17 ein Nockenwellenlagerbock 18 auf das Zylinderkopfgehäuse 11 aufgesetzt und mit diesem verbunden. In den nicht sichtbaren Lagerschalen des Lagerbocks 18 ruhen zwei Nockenwellen 55 mit den Nocken 54, welche über Lagerdeckel 21, die gleichfalls über die Verschraubungen 14 bis 16 mit dem Lagerbock 18 und damit mit dem Zylinderkopfgehäuse 11 verbunden sind, gehalten werden. Der Zylinderkopf 1 mit dem Steuerraum 5 ist nach außen durch eine über Dichtungen 22 an ihm anliegende Zylinderkopfhaube 23 abgeschlossen.

Im Zylinderkurbelgehäuse 36 sind die Zylinderkopfdichtung 37 sowie der Kolben 38 sichtbar. Vom Kühlwassermantel 39 des Zylinderkurbelgehäuses führt eine Bohrung 40 in eine Kühlwasserzuführung 41 zum Kühlwasserraum 10 des Zylinderkopfgehäuses 11. In Zylindermitte ist die bereits erwähnte zentrale Kammer 6 in eine Bohrung 49 des Lagerbocks 18 eingesetzt und mittels einer Befestigung 50 gehalten. In diesem Ausführungsbeispiel ist die Kammer 6 als Vorkammer mit Prallstift 42 angenommen, in welche eine Glühkerze 43 hineinragt und an welcher eine Einspritzdüse 44 verschraubt ist. Gegenüber dem Steuerraum 5 ist diese Einspritzdüse 44 durch eine Buchse 45 getrennt, welche an ihrem oberen Ende eine U-förmige Dichtung 46 trägt, mittels der sie gegen einen Bund 47 der Zylinderkopfhaube 23 gepreßt ist und auf diese Weise die Öffnung 48 für die Einspritzdüse seitlich abdichtet und so den Kraftstoffraum vom Ölraum trennt. Das untere Ende der Buchse 45 ist durch einen O-Ring 51 gegenüber dem Nockenwellenlagerbock 18 abgedichtet, welcher wiederum an der Trennebene 17 mittels einer Dichtung 52 den Ölraum vom Kraftstoffraum trennt. Wie der Figur zu entnehmen ist, dient der Nockenwellenlagerbock 18 gleichzeitig als Träger für die Tassenstößel 53, die, betätigt durch die Nocken 54 der Nockenwelle 55, die Gaswechselventile betätigen. Die Figur zeigt, daß die Trennebene 17 zwischen Zylinderkopfgehäuse 11 und Lagerbock 18 auf der Höhe des durch die Befestigung 50 gebildeten oberen Kammerrandes verläuft.

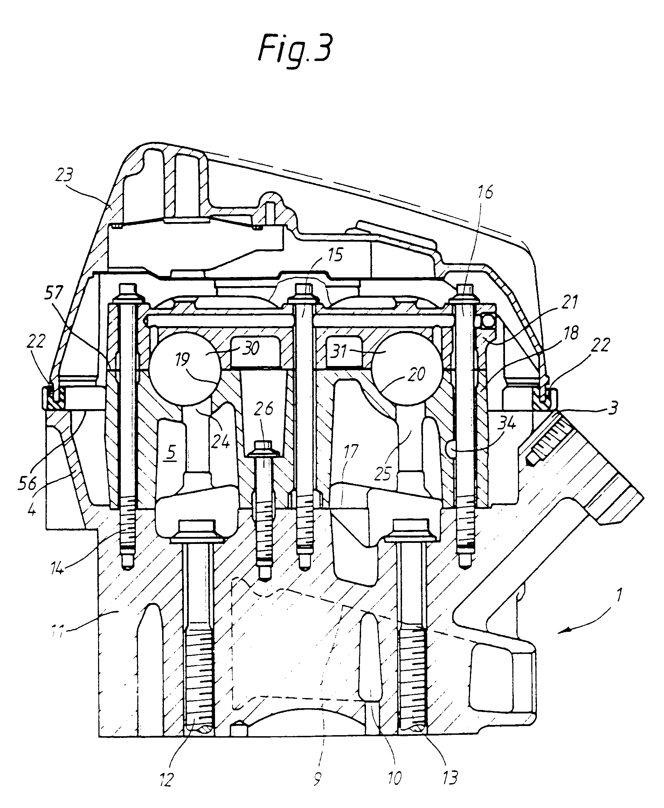

Nach der Schnittlinie III-III aus Figur 1 ist in der Figur 3 ein weiterer Querschnitt durch einen solchen Zylinderkopf 1 in Höhe der Nockenwellenlager dargestellt. Dieser Zylinderkopf 1 weist einen durch eine gestrichelt angedeutete Zylinderkopfdeckplatte 9 abgeschlossenen Kühlwasserraum 10 auf sowie den bereits erwähnten oberhalb der Deckplatte liegenden und durch die Wände 3 und 4 begrenzten Steuerraum 5. Das Zylinderkopfgehäuse 11 ist über Verschraubungen 12 und 13 mit dem nicht dargestellten Zylinderkurbelgehäuse lösbar verbunden. Über weitere Verschraubungen 14, 15 und 16 ist an der Trennebene 17 ein Nockenwellenlagerbock 18 auf das Zylinderkopfgehäuse 11 aufgesetzt und mit diesem verbunden. In den die Lagerschalen 19 und 20 des Lagerbocks 18 aufweisenden Nockenwellenlagern 30 und 31 ruhen zwei nicht gezeichnete Nockenwellen, welche über Lagerdeckel 21, die gleichfalls über die Verschraubungen 14 bis 16 mit dem Lagerbock 18 und damit mit dem Zylinderkopfgehäuse 11 verbunden sind, gehalten werden. Der Zylinderkopf 1 mit dem Steuerraum 5 ist wie schon oben beschrieben nach außen durch eine über Dichtungen 22 an ihm anliegende Zylinderkopfhaube 23 abgeschlossen. Die Lagerschalen 19 bzw. 20 können mit Öffnungen 24 bzw. 25 versehen sein, um eine einfache Demontage des Zylinderkopfs 1 auch bei aufgesetztem Lagerbock durch Lösen der Verschraubungen 12 und 13 zu ermöglichen. Der Nockenwellenlagerbock 18 wird hierbei bei abgenommenen Lagerdeckeln 21 mittels der Schraube 26 in seiner Lage fixiert.

Auch aus dieser Figur ist die Lage der Trennebene 17 ersichtlich. Sie verläuft auf gleicher Höhe wie zuvor beschrieben. Durch diese Lage wird erreicht, daß sämtliche Auflageflächen des Lagerbocks 18 auf dem Zylinderkopfgehäuse 11, nämlich sowohl die Flächen unterhalb der Nockenwellenlager als auch die Auflageflächen in Zylindermitte um die rohrförmige Kammer 6 herum, in einer Ebene angeordnet sind und ihre Oberfläche auf diese Weise einfach in einem Arbeitsgang und in einer Aufspannung bearbeitet werden können. Die Bearbeitungsdauer kann so verkürzt werden.

Aus den Figuren 2 und 3 geht hervor, daß die Seitenwände 3 und 4 des Zylinderkopfgehäuses - entsprechendes gilt auch für die beiden nicht sichtbaren Stirnwände - über die genannte Trennebene 17 zwischen Zylinderkopfgehäuse 11 und Lagerbock 18 hinausreichen und zwar bis zu einer Ebene 56, welche ihrerseits unterhalb der zwischen Lagerbock 18 und Lagerdeckeln 21 gelegenen Trennebene 57 verläuft. Diese Lage der Ebene 56, durch welche die Trennebene 57 nach oben herausragt, gestattet es, die Lagerbohrungen für die Nockenwellen 19 und 20 bei schon mit dem Zylinderkopfgehäuse 11 montiertem Lagerbock 18 zu bearbeiten.

Dadurch, daß die Seitenwände 3 und 4 sowie die Stirnwände 2 des Zylinderkopfgehäuses 11 frei über die Trennebene 17 hinausragen und nicht als Auflageflächen für den Lagerbock 18 dienen und auch keine direkte Verbindung zum Lagerbock 18 aufweisen, kann der Nockentrieb diese Wände 2 bis 4 nicht mehr zu Schwingungen anregen, wodurch die Geräuschabstrahlung von diesen Wänden verringert wird.

## Patentansprüche

1. Zylinderkopf (1)für eine mehrzylindrige Brennkraftmaschine mit einem einen Kühlwasserraum (10) begrenzenden und nach oben durch eine Zylinderkopfdeckplatte (9) abgeschlossenen Zylinderkopfgehäuse mit zylinderaxial verlaufenden rohrförmigen Kammern (6) zur Aufnahme einer Einspritzdüse (44) mit Vorkammer (6) und mit einem oberhalb der Deckplatte (9) angeordneten, von Seiten-(3,4) und Stirnwänden (2) des Zylinderkopfgehäuses begrenzten Steuerraum (5) mit Einrichtungen zur Ventilsteuerung, wobei die Seiten-(3,4) und Stirnwände (2) bis zu einer Ebene (56) hinausreichen, wobei ferner im Steuerraum (5) ein vom Zylinderkopfgehäuse unter Bildung einer Trennebene (17) getrennter Lagerbock (18) zur Aufnahme wenigstens einer Nockenwelle (55) in Nockenwellenlagern vorgesehen ist, die aus Lagerschalen im Lagerbock (18) und von diesen durch eine Trennebene getrennten Lagerdeckeln (21) bestehen, welche mit dem Lagerbock (18) verbunden sind und die Lagerschalen abdecken und wobei der Steuerraum (5) nach außen durch eine am Zylinderkopfgehäuse (11) befestigte Zylinderkopfhaube (23) abgeschlossen ist, wobei die Ebene (56) der Seiten- und Stirnwände (3,4 bzw. 2) bis unterhalb der Trennebene (57) zwischen Lagerbock (18) und Lagerdeckeln (21) reicht,
**dadurch gekennzeichnet,**
daß die Trennebene (17) zwischen Lagerbock (18) und Zylinderkopfgehäuse auf der Höhe des durch eine Befestigung (50) für die Kammer (6) gebildeten oberen Kammerrandes verläuft und daß der Lagerbock (18) für sich mittels Schrauben (26) am Zylinderkopfgehäuse (11) fixiert ist.

## Claims

1. Cylinder head (1), for a multi-cylinder internal combustion engine, having a cylinder head block which bounds a cooling water space (10), which is closed towards the top by a cylinder head cover plate (9) and has tubular chambers (6), extending in the direction of the cylinder axis, for accommodating an injection nozzle (44) with precombustion chamber (6) and having a camshaft space (5), which is located above the cover plate (9), has devices for valve control and is bounded by side walls (3, 4) and end walls (2) of the cylinder head block, the side walls (3, 4) and the end walls (2) extending out as far as a plane (56), a bearing pedestal (18) furthermore being provided in the camshaft space (5), which bearing pedestal (18) is separated from the cylinder head block so as to form a split plane (17) and accommodates at least one camshaft (55) in camshaft bearings, which consist of bearing shells in the bearing pedestal (18) and of bearing caps (21) separated from the bearing shells by a split plane, which bearing caps (21) are connected to the bearing pedestal (18) and cover the bearing shells, the camshaft space (5) being closed towards the outside by a cylinder head cover (23) fastened to the cylinder head block (11), and the plane (56) of the side walls and end walls (3, 4 and 2 respectively) extending to below the split plane (57) between the bearing pedestal (18) and the bearing caps (21), characterized in that the split plane (17) between the bearing pedestal (18) and the cylinder head block extends at the level of the upper chamber edge formed by a fastening (50) for the chamber (6) and in that the bearing pedestal (18) is itself fixed on the cylinder head block (11) by means of bolts (26).

## Revendications

1. Culasse (1), pour un moteur à combustion interne à plusieurs cylindres, comportant un carter de culasse, délimitant une enceinte d'eau de refroidissement (10) et obturée vers le haut au moyen d'une plaque de recouvrement de culasse (9), avec des chambres tubulaires (6) s'étendant dans l'axe des cylindres, pour recevoir une buse d'injection (44) munie d'une préchambre (6) et avec une enceinte de commande (5), disposée au-dessus de la plaque de recouvrement (9), délimitée par des parois latérales (3, 4) et frontale (2) du carter de culasse et équipée de dispositifs de commande de soupape, les parois latérales (3, 4) et frontale (5) arrivant jusqu'à un plan (56), un bloc palier (18), séparé du carter de culasse en constituant un plan de séparation (17) étant prévu en outre dans l'enceinte de commande (5) et destiné à supporter au moins un arbre à came (55) dans des paliers d'arbre à cames, composés de coquilles de palier montées dans le bloc palier (18), ainsi que de couvercles de palier (21), séparés de celui-ci par un plan de séparation et relié au bloc palier (18), et recouvrant les coquilles de palier, et l'enceinte de commande (5) étant obturée vers l'extérieur au moyen d'un capot de culasse (23) fixé sur le carter de culasse (11), le plan (56) des parois latérales et frontale (3, 4, respectivement 2) arrivant jusqu'au dessous du plan de séparation (57) se trouvant entre le bloc palier (18) et les couvercles de palier (21),
caractérisé en ce que le plan de séparation (17) s'étend entre le bloc palier (18) et le carter de culasse, au niveau de la bordure de chambre supérieure, formée par une fixation (50) destinée à la chambre (6),
et en ce que le bloc palier (18) est fixé en soi au moyen de vis (26) prévues sur le carter de culasse (11).
